Europäisches Patentamt

European Patent Office

Office européen des brevets

(19)

(11) Veröffentlichungsnummer: **0 254 806 B1**

(12) **EUROPÄISCHE PATENTSCHRIFT**

(45) Veröffentlichungstag der Patentschrift: 04.12.91

(51) Int. Cl.5: **D21J 5/00, B29C 67/14**

(21) Anmeldenummer: 87105224.7

(22) Anmeldetag: 08.04.87

(54) **Verfahren zur Herstellung eines Vorformlings aus faserverstärktem Material.**

(30) Priorität: 12.04.86 DE 3612407
30.10.86 DE 3636864

(43) Veröffentlichungstag der Anmeldung:
03.02.88 Patentblatt 88/05

(45) Bekanntmachung des Hinweises auf die
Patenterteilung:
04.12.91 Patentblatt 91/49

(84) Benannte Vertragsstaaten:
AT BE CH DE ES FR GB GR IT LI LU NL SE

(56) Entgegenhaltungen:
EP-A- 0 039 292        BE-A- 566 851
DE-A- 3 236 447        DE-B- 1 080 770
FR-A- 1 394 749        US-A- 3 127 307
US-A- 3 271 239        US-A- 3 793 138

(73) Patentinhaber: **DEUTSCHE FIBRIT GESELL-
SCHAFT Ebers & Dr. Müller mbH
Cracauer Strasse 55
W-4150 Krefeld(DE)**

(72) Erfinder: **Bovender, Franz, Dipl.-Ing.
Schönwasserstrasse 46
W-4150 Krefeld(DE)**
Erfinder: **Nebelung, Günter, Dipl.-Ing.
Kenger Weg 31
W-4173 Kerken 1(DE)**

(74) Vertreter: **Cohausz & Florack Patentanwälte
Postfach 14 01 61 Schumannstrasse 97
W-4000 Düsseldorf 1(DE)**

## Beschreibung

Die Erfindung betrifft ein Verfahren zum Herstellen eines Vorformlings aus faserverstärktem Material, bei dem eine wäßrige Suspension aus Verstärkungsfasern und einem Bindemittel an ein der Form des Endproduktes entsprechends Formsieb angeschwemmt und dann entwässert wird, und daß die am Formsieb angeschwemmte Lage nach Trocknung und nach Aufheizen unter Druck formfixiert wird.

Aus der EP-A-0 039 292 ist die Herstellung von hochwertigen Formkörpern aus Folienmaterial bekannt, das Fasern, insbesondere Glasfasern, und ein thermoplastisches Bindemittel enthält. Den Fasern kommt Verstärkungsfunktion zu, während das thermoplastische Bindemittel den Formkörper in Form hält. Das Folienmaterial wird nach bekannten Papierherstellungstechniken unter Verwendung von Polyolefinfibrillen und einem Flockungsmittel als Halbzeug hergestellt. Als thermoplastisches Bindemittel können Polyolefine, Polyvinylchlorid, Polystyrol, Polyamid oder ein Polyester verwendet werden. Die Verwendung solcher Folie für die Herstellung von Formkörpern ist nachteilig, weil die Formgebung nur insoweit Freiheitsgrade zuläßt, wie das Folienmaterial in Verstreckungsbereiche noch ausreichende Stoffquantitäten sicherstellt. In Zonen mit Verstreckungen muß zur Aufrechterhaltung einer ausreichenden Materialdicke deshalb mehr Folienmaterial durch Schichtung eingelegt werden, was recht aufwendig ist.

Weiter ist von Nachteil, daß zur Herstellung von Formkörpern aus Folienmaterial in der Regel Verschnitt anfällt. Auch ist von Nachteil, daß zur Füllung der Form für einen konturierten Körper das einfache (Warm)Umformen des bahn- oder folienförmigen Halbzeuges mit relativ geringen Drücken nicht ausreicht und der Druck so hoch sein muß, daß der zunächst flächige Rohstoff durch Fließen als äußerst zähe, strukturviskose Schmelze in Kontur gebracht wird.

Der hohe Anspruch an diese Verarbeitungsparameter bedeutet für die Praxis, daß Preßdrücke zwischen etwa 150 - 300 bar notwendig sind und das Verfahren in Anbetracht wirtschaftlicher Überlegungen hinsichtlich Pressenleistung und Werkzeugauslegung in Abhängigkeit zur Formteilgröße und Qualität sehr schnell an Grenzen stößt.

Diese Nachteile treten bei einem anderen aus der US-A-3 271 239 bekannten Verfahren nicht auf, bei dem die Formkörper in der Weise hergestellt werden, daß eine wäßrige Aufschlämmung von Zellulose-Fasern gemeinsam mit geringen Mengen thermoplastischer Bindemittel gegen Kontursiebe transportiert wird, daß Wasser rückseitig abgezogen wird, die auf diese Weise auf der Siebvorderseite entstehende Faserlage zu einem Vorformling verdichtet wird und dieser anschließend unter erhöhtem Druck von etwa 30 bar und bei einer Temperatur von etwa 150 °C getrocknet und verfestigt wird.

Nach einem weiteren aus der US-A-3 127 307 bekannten Verfahren werden Vorformkörper aus einer wäßrigen Suspension von Zellulosefasern und Glasfasern unter Abscheiden der Flüssigkeit gepreßt. Die Formkörper können mit duroplastischem Kunststoff imprägniert werden.

Diese Verfahren erfüllen nicht immer die an den Werkstoffcharakter gestellten Forderungen, insbesondere die nach ausreichender Festigkeit.

Die Aufgabe der Erfindung ist es, einen Vorformling ausreichend hoher Festigkeit mit geringem Aufwand herzustellen, bei dem auch in Bereichen starker Verformung eine ausreichende Materialstärke gewährleistet ist.

Gelöst wird diese Aufgabe bei dem gattungsgemäßen Verfahren erfindungsgemäß dadurch, daß

a) die getrocknete Lage aus den Verstärkungsfasern, insbesondere Glasfasern, und dem pulver- und/oder faserförmigen thermoplastischen Bindemittel besteht,

b) und die Lage formfixiert wird durch

ba) Aufheizen der Lage auf eine Temperatur, bei der das Bindemittel sinterbereit ist,

bb) Einbringen der Lage in eine Form, die kälter ist als die dem Erweichungspunkt des Bindemittels entsprechende Temperatur,

bc) Verdichten mit einem Druck von unter 150 bar und dabei

bd) Versintern.

Die Vorteile des erfindungsgemäßen Verfahrens bestehen darin, daß bei geringem Werkzeug-Druckniveau in preiswerten Formen hochfeste faserverstärkte thermoplastische Sinterformkörper nahezu beliebiger Größe und Konturfreiheit ohne Verschnitt erzeugt werden können. Dabei ist kein bereichsweises mehrschichtiges Auflegen von Material notwendig. Des weiteren sind Verstreckungszonen mit Ausdünnungen ausgeschlossen. Daher sind diese Körper in bisher nicht erwarteter Wirtschaftlichkeit herstellbar.

## Beispiel

Eine Faserstoffsuspension aus 30 % Glasfasern von ca. 10 mm Länge und 70 % thermoplastischen Bindemitteln, überwiegend Polypropylen, wurde an ein Formsieb mit einer Maschenweite kleiner dem Teilchendurchmesser der Bindemittel angeschwemmt. Anschließend erfolgt das Entwässern bei einem Druck von 6 bar. Der so hergestellte Vorformling wurde bis zur Gewichtskonstanz getrocknet. In diesem Zustand kann er transportiert und zwischengelagert werden.

Zur endgültigen Formfixierung des Körpers wird dieser auf eine Temperatur im Schmelzbereich der Bindemittel, nämlich 200 °C aufgeheizt und anschließend in einem temperierten Preßwerkzeug bei 70 °C mit einem Preßdruck von 20 bar gepreßt. Die Gesamtlänge der Glasfasern bleibt bei dieser Herstellung erhalten, so daß deren Festigkeit voll zum Tragen kommt. Der so hergestellte Formkörper ist in seinen Eigenschaften Formkörpern vergleichbar, die im Fließpreßverfahren aus GMT (Glasmatten-Thermoplast) hergestellt werden.

## Patentansprüche

1. Verfahren zum Herstellen eines Vorformlings aus faserverstärktem Material, bei dem eine wäßrige Suspension aus Verstärkungsfasern und einem Bindemittel an ein der Form des Endproduktes entsprechendes Formsieb angeschwemmt und dann entwässert wird, und bei dem die am Formsieb angeschwemmte Lage nach Trocknung und nach Aufheizen unter Druck formfixiert wird, **dadurch gekennzeichnet, daß**

   a) die getrocknete Lage aus den Verstärkungsfasern, insbesondere Glasfasern, und dem pulver- und/oder faserförmigen thermoplastischen Bindemittel besteht,

   b) und die Lage formfixiert wird durch

   ba) Aufheizen der Lage auf eine Temperatur, bei der das Bindemittel sinterbereit ist,

   bb) Einbringen der Lage in eine Form, die kälter ist als die dem Erweichungspunkt des Bindemittels entsprechende Temperatur,

   bc) Verdichten mit einem Druck von unter 150 bar und dabei

   bd) Versintern.

## Claims

1. A process for the production of a preform from fibre reinforced material, wherein an aqueous suspension of reinforcing fibres and a bonding agent is deposited on a moulding sieve corresponding to the shape of the end product and then dewatered, the layer deposited on the moulding sieve being fixed in shape after drying and heating under pressure, characterized in that

   a) the dried layer consists of the reinforcing fibres, more particularly glass fibres, and the pulverulent and/or fibrous thermoplastic bonding agent,

   b) and the layer is fixed in shape by

   ba) heating the layer to a temperature at which the bonding agent is ready for sintering,

   bb) the layer is introduced into a mould which is cooler than the temperature corresponding to the softening point of the bonding agent,

   bc) compacting is performed with a pressure of below 150 bar, and at the same time

   bd) sintering is performed.

## Revendications

1. Procédé pour fabriquer un pré-agglomérat en matériau renforcé par des libres, dans lequel une suspension aqueuse de libres de renforcement et un liant sont entraînés sur un filtre-moule correspondant à la forme du produit final et ensuite asséchés, et la couche entraînée sur le filtre-moule est fixée en forme sous pression après séchage et après chauffage, caractérisé en ce que

   a) la couche séchée est constituée par les libres de renforcement, en particulier libres de verre, et par le liant thermoplastique pulvérulent et/ou fibreux;

   b) et la couche est fixée en forme par

   ba) chauffage de la couche à une température à laquelle le liant est prêt au frittage,

   bb) introduction de la couche dans un moule qui est plus froid que la température correspondant au point de ramollissement du liant,

   bc) compression sous une pression inférieure à 150 bar et, en même temps,

   bd) frittage.